# EUROPEAN PATENT SPECIFICATION

(11) **EP 2 749 100 B1**
(45) Date of publication and mention of the grant of the patent: **21.06.2017**
(21) Application number: 11876993.4
(22) Date of filing: 09.12.2011
(51) Int. Cl.: H04W 72/04, H04W 8/26, H04W 76/02

(54) **METHOD AND DEVICE FOR INCREASING THE ADDRESS SPACE FOR MOBILE TERMINALS IN A WIRELESS NETWORK**
VERFAHREN UND VORRICHTUNG ZUR ERHÖHUNG DES ADRESSRAUMS FÜR MOBILE ENDGERÄTE IN EINEM DRAHTLOSEN NETZWERK
PROCÉDÉ ET DISPOSITIF D'AUGMENTATION DE L'ESPACE ADRESSE POUR TERMINAUX MOBILES DANS UN RÉSEAU DE COMMUNICATIONS SANS FIL

(43) Date of publication of application: 02.07.2014
(73) Proprietor: Telefonaktiebolaget LM Ericsson (publ), 164 83 Stockholm (SE)
(72) Inventor: HOLM, Anders, S-584 37 Linköping (SE); AXELSSON, Håkan, S-582 46 Linköping (SE); HALLBERG, Anders, S-590 77 Vreta Kloster (SE); MYRBERG, Oskar, S-603 74 Norrköping (SE); NILSSON, Jonas, S-590 74 Ljungsbro (SE)
(74) Representative: Ericsson
(86) International application number: PCT/SE2011/051496
(87) International publication number: WO 2013/085446

(56) References cited:
- WO-A1-2011/056118
- WO-A1-2011/104371
- US-A1- 2002 041 583
- GERAN IMTC: 'Discussion on identifiers' 3GPP TSG GERAN #48, GP-101953 22 November 2010, XP050486213
- 'Attempt to progress discussion on two proposed TBF-related features' 3GPP DRAFT, AT&T 14 February 2001, XP050412963
- 'GSM/EDGE Radio Access Network (GERAN) overall description; Stage 2' 3GPP TS 43.051 V4.0.0 02 November 2000, pages 1 - 53, XP050378065

## Description

### TECHNICAL FIELD

The present embodiments generally relate to allocating radio resources for mobile stations in a wireless communication network and, more particularly, to increasing the addressing space for mobile stations in such a network.

### BACKGROUND

So far, the traffic generated in mobile networks such as e.g. GERAN (GSM (Global System for Mobile communications) EDGE (Enhanced Data rates for GSM Evolution) Radio Access Network) and UTRAN (UMTS (Universal Mobile Telecommunications System) Terrestrial Radio Access Network) has mostly been dominated by services that require human interaction, such as e.g. regular speech calls, web surfing, sending MMS, doing video-chats etc, and the same traffic pattern is also anticipated for E-UTRAN (Evolved-UTRAN). As a natural consequence, these mobile networks are designed and optimized primarily for these "Human Type Communication" (HTC) services.

There is, however, an increasing market segment for Machine Type Communication (MTC) services, which do not necessarily need human interaction. MTC services include a very diverse flora of applications, ranging from e.g. vehicle applications (such as automatic emergency calls, remote diagnostics and telematics, vehicle tracking etc.) to gas and power meter readings, and also network surveillance and cameras, to just give a few examples. The demands that MTC services put on the mobile network, e.g. in terms of the number of communication devices to be served in the network, will without any doubt significantly differ from what is provided by today's HTC-optimized mobile networks. Thus, in order for mobile networks such as GERAN and UTRAN to be competitive for these mass market MTC applications and devices, it is important to optimize the support of such networks for MTC communication.

One of the critical issues in e.g. GERAN is how to distinguish and properly address a vast number of devices for the case of simultaneous data transfer on shared radio resources, since the available addressing spaces may not be sufficient. One of the identifiers that may be a bottleneck in this respect is the so-called Temporary Flow Identity (TFI) which is assigned by the GERAN network to each Temporary Block Flow (TBF) for the purpose of e.g. identifying a particular TBF and the transmitted Radio Link Control / Medium Access Control (RLC/MAC) blocks associated with that TBF.
- In GSM data is sent and received in a time division manner; one Time Division Multiple Access (TDMA) frame is divided into eight timeslots. These timeslots can be used for either voice, data or signaling. To transfer data, a Temporary Block Flow (TBF) needs to be set up on one or more timeslots, and it is identified by a Temporary Flow Identity (TFI). Each TBF is assigned a TFI value by the mobile network. The addressing of the mobile station in GPRS/EDGE transfer mode is handled by the TFI. The uplink and downlink TFI value is unique per TBF and assigned Packet Data Channel (PDCH, a timeslot reserved for the packet switched domain). This limits the number of concurrent TBFs and thus the number of devices that may share the same radio resources.

In the header of an RLC/MAC block for data transfer, the TFI identifies the TBF to which the RLC data block belongs. For the downlink and uplink TFI, the TFI itself is a 5-bit field encoded as a binary number in the range 0 to 31, which is typically provided to the mobile station (MS) by the GERAN network upon assignment of the TBF. This means that, for example, every time an MS receives a downlink data or control block, it will use the included TFI field to determine if this block belongs to any (there can be more than one) of the TBFs associated with that very MS. If so, the block is obviously intended for this MS, whereupon the corresponding payload is decoded and delivered to upper layers, and is discarded otherwise. In the uplink direction the behavior is similar, i.e. the mobile network uses the TFI value to identify blocks that belong to the same TBF.

The international application WO 2011/104371 A1 describes a method for a mobile station to communicate with a wireless communications network. The method describes a method for the mobile station to monitor different subsets of timeslots within a set of timeslots designated for communication. For a particular TBF established between a mobile station and a network, the TBF may be identified by a TFI. The TFI is encoded in a header of a data block and may be decoded by the MS to ascertain if the TFI is related to a particular TBF that is assigned to the MS. If the MS detects a TFI relating to a TBF between the MS and the network, the MS may resume monitoring on one or more previously unmonitored timeslots.

To multiplex mobile stations on the uplink an Uplink State Flag (USF) is available for each PDCH. The USF field is sent in all downlink RLC/MAC blocks. When a mobile station reads its own USF value on a PDCH it is assigned with, it knows that it is allowed to transmit on that timeslot in the next radio block period. The USF field is 3 bits in length and 8 different USF values can be assigned. One USF value normally needs to be reserved for uplink blocks scheduled by other means than USF, leaving 7 USF values that can be used for scheduling of UL TBFs.

The numbers of possible TFI values are limited by the available 5 bits, which thus allows for 32 individual values. This may appear sufficient, and has until now provided no significant limitation. There are however a number of indicators that the TFI addressing space may be a limiter in the future.

If a TBF is assigned to be used on more than one PDCH (which is most often the case) the number of usable TFIs per PDCH drastically decreases. Assume e.g. that all TBFs are used on all 8 PDCHs. This means that the average number of TFIs per PDCH will be 32/8=4, as compared to the 32 TFIs per PDCH that would be the case otherwise. In most situations it is desirable to spread a TBF over as many PDCHs as possible in order to improve the statistical multiplexing gain and flexibility, but this has the drawback of reducing the potential number of TBFs that can be supported on any given set of PDCHs.

With recent additions to the 3GPP (3^{rd} Generation Partnership Project) standards which allow the use of multiple TBFs associated with one and the same MS by means of Multiple TBF procedures and/or Enhanced Multiplexing of a Single TBF (EMST), the number of TBFs associated with any given MS will no longer be limited to one per direction. One particular MS could now e.g. in the downlink have one TBF for a web-surfing session, another for an ongoing voice call and finally a third for a messaging service such as MSN. The benefit on splitting these particular services over different TBFs is of course that they all have different service requirements, but an obvious drawback is that more TFIs are needed.

The amount of Packet Switched (PS) traffic in a typical GERAN network is continuously and rapidly increasing already today, with the usage of classical HTC services as described above. Bearing in mind the anticipated vast increase in the number of HTC+MTC devices in the near future, it is more than likely that the PS traffic volume in GERAN, and implicitly the number of TBFs per transmitter, will increase manifold. It is not at all an unlikely situation that for these kinds of services, it would be beneficial to multiplex perhaps dozens or more users of the same uplink PDCH.

There is therefore a need for a solution for allocating radio resources for communication devices in a wireless communication network, such as GERAN, that will increase the number of communication devices that can be used simultaneously in the communication network. Any occurrence of the term "embodiment" in the description has to be considered as an "aspect of the invention", the invention being defined only in the appended independent claims.

### SUMMARY

The present disclosure aims to obviate some of the above mentioned problems, and to provide increased addressing space for mobile stations in a wireless communication system.

An aspect of the embodiments defines a method, in a base station subsystem, of allocating radio resources to mobile stations in a wireless communication system. The method comprises the base station subsystem assigning a respective Temporary Block Flow (TBF) to each of the mobile stations in a cell in the communication system, and then assigning to each TBF a Temporary Flow Identity (TFI), at least one Packet Data Channel (PDCH), and an Uplink State Flag (USF) if the TBF is an uplink TBF. The base station subsystem then selects different training sequences from a plurality of available training sequences and assigns a respective different selected training sequence to two or more TBFs wherein these two or more TBFs share the same assigned Temporary Flow Identity (TFI), the same assigned Packet Data Channel (PDCH), and/or the same assigned Uplink State Flag (USF) if the TBF is an uplink TBF.

Another aspect of the embodiments defines a base station subsystem configured to allocate radio resources to mobile stations in a wireless communication system. A TBF assigner of the base station subsystem is configured to assign a respective Temporary Block Flow (TBF) to each of the mobile stations in a cell in the communication system. The base station subsystem also comprises a TFI assigner configured to assign to each TBF a Temporary Flow Identity (TFI), a PDCH assigner configured to assign to each TBF at least one Packet Data Channel (PDCH), an USF assigner configured to assign for each assigned uplink PDCH an Uplink State Flag (USF), a training sequence selector configured to select different training sequences from a plurality of available training sequences, and a training sequence assigner configured to assign a respective different selected training sequence to two or more TBFs wherein these two or more TBFs share the same assigned Temporary Flow Identity (TFI), the same assigned Packet Data Channel (PDCH), and/or the same assigned Uplink State Flag (USF) if the TBF is an uplink TBF.

A further aspect of the embodiments defines a computer program for allocating radio resources to mobile stations in a wireless communication system. The computer program comprises code means which when run by a processing unit of the base station subsystem causes the processing unit to assign a respective Temporary Block Flow (TBF) to each of the mobile stations in a cell in the communication system, and to assign to each TBF a Temporary Flow Identity (TFI), at least one Packet Data Channel (PDCH), and an Uplink State Flag (USF) if the TBF is an uplink TBF. The processing unit is also caused to select different training sequences from a plurality of available training sequences, and to assign a respective different selected training sequence to two or more TBFs wherein these two or more TBFs share the same assigned Temporary Flow Identity (TFI), the same assigned Packet Data Channel (PDCH), and/or the same assigned Uplink State Flag (USF) if the TBF is an uplink TBF.

An advantage of the disclosed embodiments is that increased addressing space for mobile stations in a wireless communication system is provided without impacting the technical specifications of existing communication systems and the described solution will thereby work with legacy terminals.

### BRIEF DESCRIPTION OF THE DRAWINGS

The embodiments, together with further objects and advantages thereof, may best be understood by making reference to the following description taken together with the accompanying drawings, in which:
Fig. 1 is a schematic illustration of a communication system according to an embodiment.
Figs. 2A, 2B and 2C illustrate airframe timeslots on downlink (DL) and uplink (UL) in a General Packet Radio Service (GPRS) communication network;
Fig. 3 is a flow chart showing a method for allocating radio resources for mobile stations according to an embodiment;
Fig. 4 illustrates the message flow between mobile stations and a base station at Temporary Block Flow (TBF) setup according to an embodiment;
Fig. 5 is a block diagram of a base station subsystem according to an embodiment; and
Fig. 6 is a block diagram of a computer implementation according to an embodiment.

### DETAILED DESCRIPTION

The present embodiments generally relate to allocating radio resources for mobile stations in a communication system and, more particularly, to increasing the Temporary Flow Identity addressing space.

Throughout the drawings, the same reference numbers are used for similar or corresponding elements.

The present disclosure is described in the context of a GPRS/EDGE wireless communication network. However, the embodiments may also be implemented in other similar systems.

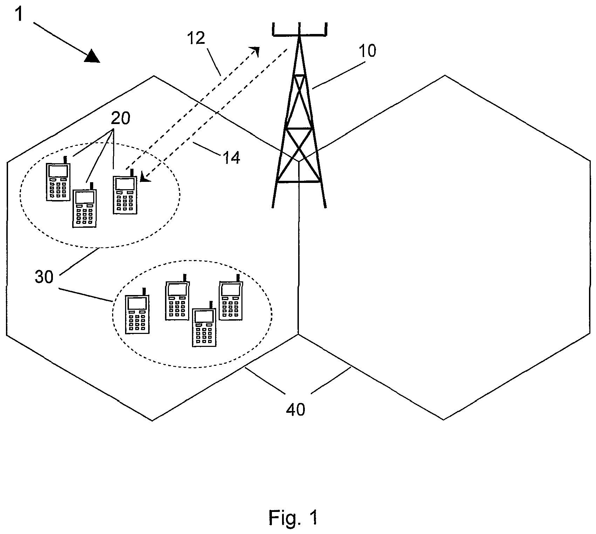

Fig. 1 is a schematic overview of a portion of a communication system 1 to which the present embodiments can be applied. The communication system 1 is preferably a wireless, radio-based communication network or system providing communication services to connected user equipment(s) 20. The communication system 1 comprises radio base stations 10 providing communication services within a coverage area, typically denoted cell 40. Generally, downlink transmission of user-specific data is performed by the radio base station 10 on a downlink channel 14 towards the user equipment 20, whereas uplink data transmission from the user equipment 20 is performed on an uplink channel 12 in Fig. 1. Some uplink related control channels are also transmitted by the radio base stations 10 on the downlink channels 14.

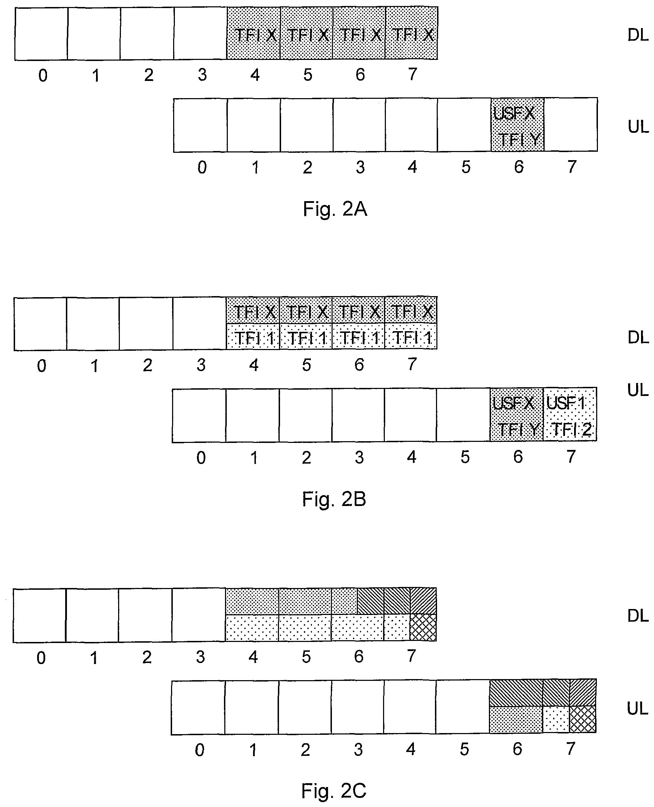

As indicated in the background section, in GSM data is sent and received in a time division manner; one Time Division Multiple Access (TDMA) frame (5 ms) is divided into eight timeslots, usually numbered 0 to 7 from "left to right" in time. These timeslots can be used for either voice, data or signaling. Since most mobile stations cannot send and receive at the same time, they have to switch between sending and receiving. For this reason the uplink (UL) is shifted 3 timeslots "to the right" in time, as illustrated in Figs. 2A-C, so a mobile station can send and receive on the "same" timeslot.

To transfer data, a Temporary Block Flow (TBF) needs to be set up on one or more timeslots, and it is identified by a Temporary Flow Identity (TFI). Each TBF is assigned a TFI value by the mobile network. The addressing of the mobile station in GPRS/EDGE transfer mode is handled by the TFI. The uplink and downlink TFI value is unique per TBF and assigned Packet Data Channel (PDCH, a timeslot reserved for the packet switched domain). To multiplex mobile stations on the uplink an Uplink State Flag (USF) is available for each PDCH. The USF field is sent in all downlink RLC/MAC blocks. When a mobile station reads its own USF value on a PDCH it is assigned with, it knows that it is allowed to transmit on that timeslot in the next radio block period.

In the example shown in Fig. 2A, timeslots 4-7 are dedicated for data. A mobile station is reserved on timeslot 4-7 in the downlink (DL) and 6 in the uplink (UL) (illustrated with a dotted pattern). The downlink TFI for that mobile station is denoted TFI X, the uplink USF is denoted USF X and the uplink TFI is denoted TFI Y.

In Fig. 2B another mobile station enters the network, and the system allocates timeslots 4-7 in the downlink and 7 in the uplink (illustrated with a sparser dotted pattern for the new mobile). The downlink TFI for that mobile station is denoted TFI 1, the uplink USF is denoted USF 1 and the uplink TFI is denoted TFI 2. So far in this example, two TFIs have been used on each allocated timeslot on the downlink, and one USF on timeslot 6 and one USF on timeslot 7 have been used on the uplink.

In Fig. 2C more mobile stations enter the network and more resources are occupied. The examples in Figs. 2A-C illustrate how users could be reserved on timeslots in the Packet Switched (PS) domain; it might or might not reflect an actual scenario.

For the downlink and uplink TFI, the TFI itself is a 5-bit field. The numbers of possible TFI values are thus limited by the available 5 bits, which allows for 32 individual values in the range 0 to 31. The USF field is 3 bits in length and 8 different USF values can be assigned. One USF value normally needs to be reserved for uplink blocks scheduled by other means than USF, leaving 7 USF values that can be used for scheduling of UL TBFs.

Thus, problems with the existing solutions are:
- Maximum 7 uplink TBFs can share the same PDCH due to USF value range.
- A TBF is assigned one and only one TFI and the TFI must be unique per PDCH. The maximum number of TBFs sharing one PDCH is 32. For the example with TBFs using 8 timeslots the maximum number of TBFs will be 32 on a carrier.

The above means that the address space of USF and TFI is too small for the expected PS traffic growth, as indicated in the background section.

The patents US 2011/0194410 and WO 2011/056118 both address this issue, using basically the same approach for increasing the address space when assigning addresses to a communication device, i.e. they both make use of an extended addressing individual (extended TFI / extended USF) for increasing the address space. In order for this approach to work, transmission of parallel radio bursts is needed, which the mobile stations shall combine into this extended addressing individual. This requires double decoding and interference cancellation techniques similar to VAMOS (Voice services over Adaptive Multi-user channels on One Slot). This means that transmitted radio blocks are restricted to GMSK (Gaussian Minimum Shift Keying) modulation, i.e. any higher order modulations cannot be used with this technique. Also, the technique described in these patents requires standard changes and support for new mobile stations.

The basic concept of the embodiments described herein is to increase the address space for the TBFs sharing the same resources without impacting the technical specifications of existing communication systems and this will thereby work with legacy terminals.

The inventors of the present disclosure have identified the possibility, and usefulness, of providing more than one training sequence and assigning different training sequences to different TBFs. Thereby, each carrier will have multiple training sequences defined. For each training sequence a full set of USF and TFI value ranges will be available. This increases the address space for the carrier with a multiple of the number of training sequences defined for the carrier. Note that the disclosed solution requires that the Radio Resource Management algorithm for TBF assignment is extended with an algorithm to select training sequence in combination with USF and TFI.

With the present embodiments it will be possible to re-use the USF and TFI addresses within the same PDCH by using different training sequences for different mobile stations on the same PDCH. Until now, the USF and TFI addresses can only be used once per PDCH, but with the present embodiments the USF and TFI addresses can be used once per training sequence and PDCH.

According to a basic embodiment, at TBF assignment the mobile station is assigned not only USF, TFI and PDCH(s), as in prior art, but also a training sequence. The USF and TFI need to be unique within a PDCH and training sequence, so an algorithm is needed in the network to decide what USF, TFI, PDCH(s) and training sequence should be assigned to the mobile station. In other words, mobile stations can share identical or near identical sets of PDCH, TFI and USF by being assigned different training sequences.

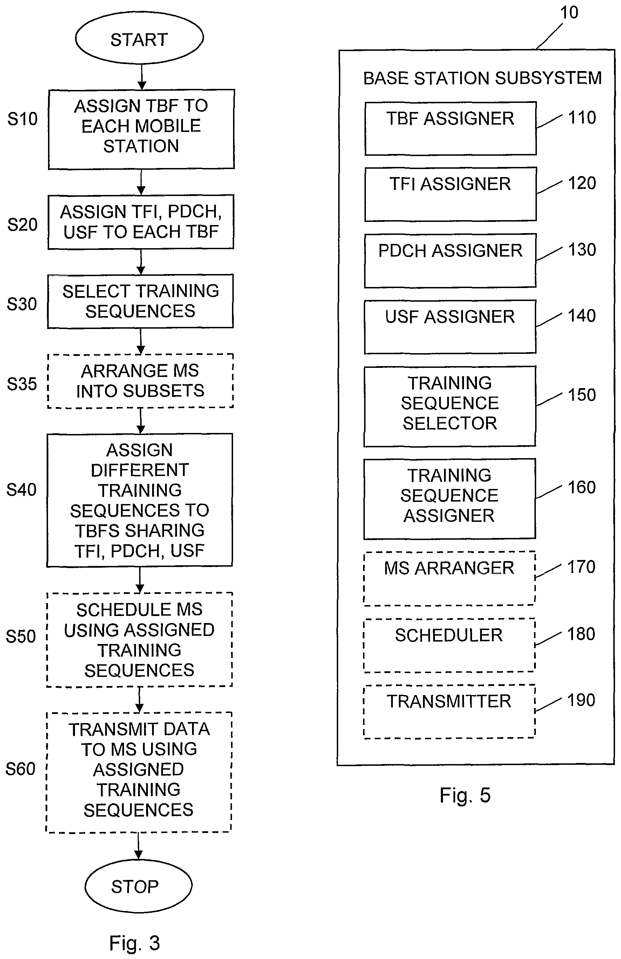

Fig. 3 is a flow chart illustrating a method for allocating radio resources for a plurality of mobile stations according to an embodiment. According to the method, the base station subsystem 10 assigns a TBF to each mobile station 20 in a cell 40, and then assigns a TFI, one or more PDCH(s) and, if the TBF is an uplink TBF, also an USF, to each assigned TBF. The base station subsystem 10 then selects a number of training sequences and assigns different training sequences to each of the mobile stations 20 in the cell 40. The mobile stations 20 may all share the same TFI, PDCH and/or USF, as long as they have different training sequences. The combination of training sequence, TFI, PDCH and/or USF must however be unique.

Thus, the method illustrated in Fig. 3 generally starts in step S10 where the base station subsystem 10 assigns a respective TBF to each of the mobile stations 20 in a cell 40. In a next step S20, the base station subsystem 10 assigns each TBF with a TFI, at least one PDCH, and an USF if the TBF is an uplink TBF. In a next step S30, the base station subsystem 10 selects different training sequences from a plurality of available training sequences. Finally, in a step S40, the base station subsystem 10 assigns a respective different selected training sequence to two or more TBFs, wherein the two or more TBFs share the same assigned TFI, PDCH, and/or USF if the TBF is an uplink TBF. This means that it will be possible to re-use the TFI and USF values within the same PDCH by using different training sequences for different mobiles on the same PDCH. Thus, the address space for the carrier will increase with a multiple of the number of training sequences as compared to prior art. The method generally ends after step S40.

It is desired that the assigned training sequence can be dynamically changed for each mobile station 20, as the TFI and USF already can before this disclosure. In a particular embodiment, step S40 of Fig. 3 comprises the base station subsystem 10 assigning training sequences dynamically for each of the mobile stations 20 in a cell 40. This can be accomplished by re-assigning the TBF with a control message. In prior art, the TFI and USF can already be dynamically changed in this manner. Hence, it should be possible to use the already existing TBF re-assigning control message also for implementing dynamical assigning of training sequences according to the present embodiments.

In an alternative embodiment, the mobile stations 20 in a cell 40 are arranged into subsets 30. Arranging the mobile stations 20 into subsets 30 can be done in several ways according to vendor implementation. They could e.g. be divided between subsets based on Quality of Service (QoS) requirements, subscriber group or randomly. In this embodiment, different training sequences are used for different subsets 30 of mobile stations 20 in a cell 40. Thus, the same training sequence is used for all mobile stations 20 within a subset 30. Obviously, the mobile stations 20 within a subset 30 need to be assigned with a unique combination of TFI, PDCH and/or USF, whereas mobile stations 20 belonging to different subsets 30 can still share the same TFI, PDCH and/or USF:
This alternative embodiment comprises an optional additional step S35, illustrated with a dotted line in Fig. 3 to indicate that it is optional, and preceding the step S40 of the method of Fig. 3. In step S35 the base station subsystem 10 arranges the mobile stations 20 into a plurality of subsets 30 of mobile stations 20 chosen among the mobile stations 20 in a cell 40. Then, in the next step S40 when different straining sequences are assigned, the base station subsystem 10 assigns a first training sequence to a first TBF assigned to a mobile station 20 of a first subset 30 of mobile stations 20, and a second different training sequence to a second TBF assigned to a mobile station 20 of a second subset 30 of mobile stations 20, wherein the first and second TBF share the same assigned TFI, PDCH, and/or USF if the TBF is an uplink TBF. This means that when performing step S40, the base station subsystem 10 will assign the same training sequence for all mobiles in the entire subset 30, and use different TFI, PDCH and USF within the subset. In prior art communication networks, the same training sequence is used for all mobiles in an entire cell 40, whereas in the embodiments described herein, the same training sequence is used for all mobiles in a subset 30 of mobiles 20 in a cell 40. This basically means that the same amount of mobile stations 20 can be assigned in a subset 30 when using the technique according to the present embodiments, as in a cell 40 when using technique according to prior art.

When the network shall uplink-schedule a mobile station 20, it transmits the assigned USF using the assigned training sequence. Any other mobile station 20 with the same USF assigned will not successfully decode this USF, since it will use another training sequence to try to decode the block, and will therefore not be uplink-scheduled. In an optional additional step S50 of the method illustrated in Fig. 3, the base station subsystem 10 schedules each of the mobile stations 20 in a cell 40 for uplink and downlink communication using each respective training sequence assigned to each respective mobile station 20 in a cell 40.

When the network shall transmit a downlink block to a mobile station 20 it shall transmit it using the training sequence which was assigned to the mobile station 20 at TBF assignment together with the assigned TFI. This will make sure that only one mobile station 20 will successfully receive the downlink block. In an optional additional step S60 of the method illustrated in Fig. 3, the base station subsystem 10 transmits data to each of the mobile stations 20 in a cell 40 using each respective training sequence assigned to each respective mobile station 20 in a cell 40.

The method illustrated in Fig 3 is preferably implemented in a General Packet Radio Service / Enhanced Data rates for GSM Evolution (GPRS/EDGE) mobile network.

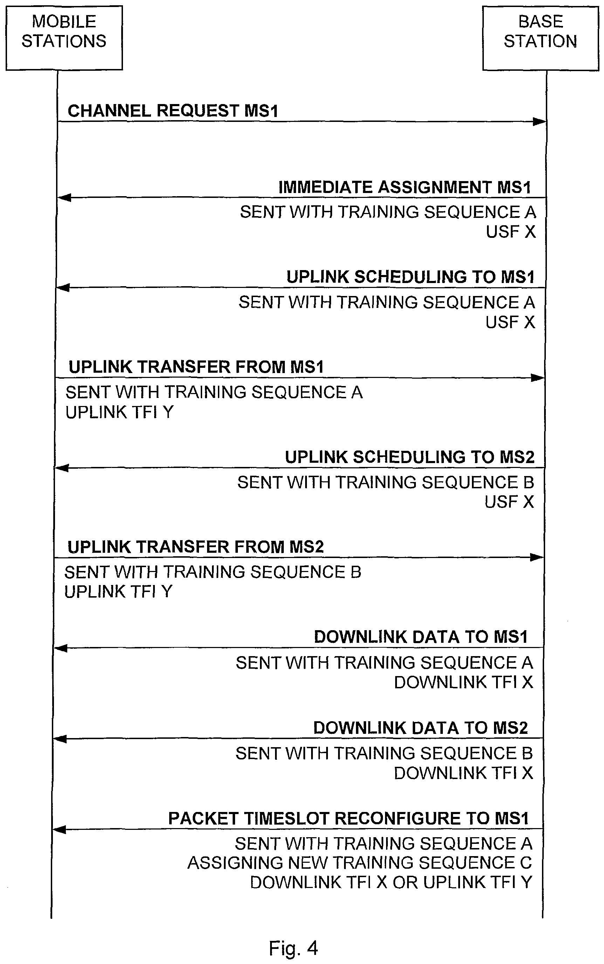

Fig. 4 shows an example of the message flow between mobile stations (MS) and a base station at TBF setup with multiple training sequences according to an embodiment. The message flow according to this example is as follows:
1. Channel Request: The MS performs access on Random Access Channel (RACH).
2. Immediate Assignment: The network assigns the MS with an index to a certain training sequence (TS) and a channel together with a USF.
3. Uplink Scheduling to MS 1: To schedule the MS for uplink transmission the network sends downlink data to any MS. The header also contains the USF value for the MS that should be scheduled in the next radio block period. Another MS with a different TS will not be able to decode the header with the USF value and will thus not send.
4. Uplink Transfer from MS 1: The MS that was scheduled will transfer its uplink data.
5. Uplink Scheduling to MS 2: The network now schedules the same USF to another MS, but using a different TS.
6. Uplink Transfer from MS 2: The MS that was scheduled will transfer its uplink data.
7. Downlink data to MS 1: The network now sends data to one MS. The MS with the correct combination of TS and TFI will use the data.
8. Downlink data to MS 2: The network now sends data to another MS with the same TFI as the previous one but with a different TS.
9. Packet Timeslot Reconfigure to MS 1: The network can change the training sequence that should be used by sending a Packet Timeslot Reconfigure, changing both uplink and downlink TBF.

Note that the message flow described in Fig. 4 is just an example and other scenarios are possible within the scope of the embodiments described herein.

With reference to Fig. 5, an embodiment of a base station subsystem 10 suitable for providing the functionality of the method described in connection with Fig. 3 will be described below. Fig. 5 is a schematic block diagram of a base station subsystem 10 according to an embodiment. The base station subsystem 10 is configured to allocate radio resources to a plurality of mobile stations 20 in a wireless communication system 1.

According to one embodiment, the base station subsystem 10 comprises a TBF assigner 110 configured to assign a respective TBF to each of the mobile stations 20 in a cell 40, a TFI assigner 120 configured to assign to each TBF a TFI, a PDCH assigner 130 configured to assign to each TBF at least one PDCH, an USF assigner 140 configured to assign for each assigned uplink PDCH an USF, a training sequence selector 150 configured to select different training sequences from a plurality of available training sequences, and a training sequence assigner 160 configured to assign a respective different selected training sequence to two or more TBFs, wherein the two or more TBFs share the same assigned TFI, PDCH, and/or USF if the TBF is an uplink TBF.

In a particular embodiment, the training sequence assigner 160 is configured to assign training sequences dynamically for each of the mobile stations 20 in a cell 40. This can be accomplished by configuring the training sequence assigner 160 to re-assign the TBF with a control message. In prior art, the TFI and USF can already be dynamically changed in this manner. Hence, it should be possible to use the already existing TBF re-assigning control message also for implementing dynamical assigning of training sequences according to the present embodiments.

In another embodiment, the base station subsystem 10 further comprises a mobile station arranger 170 configured to arrange the mobile stations 20 into a plurality of subsets 30 of mobile stations 20 chosen among the mobile stations 20 in a cell 40. In this embodiment, the training sequence assigner 160 is configured to assign a first training sequence to a first TBF assigned to a mobile station 20 of a first subset 30 of mobile stations 20, and a second different training sequence to a second TBF assigned to a mobile station 20 of a second subset 30 of mobile stations 20, wherein the first and second TBF share the same assigned TFI, PDCH, and/or USF if the TBF is an uplink TBF. This means that the training sequence assigner 160 is configured to assign the same training sequence for all mobiles in the entire subset 30, and use different TFI, PDCH and USF within the subset. In prior art communication networks, the same training sequence is used for all mobiles in an entire cell 40, whereas in the embodiments described herein, the same training sequence is used for all mobiles in a subset 30 of mobiles 20 in a cell 40. This basically means that the same amount of mobile stations 20 can be assigned in a subset 30 when using the technique according to the present embodiments, as in a cell 40 when using technique according to prior art.

In a further embodiment, the base station subsystem 10 further comprises a scheduler 180 configured to schedule each of the mobile stations 20 in a cell 40 for uplink and downlink communication using each respective training sequence assigned to each respective mobile station 20 in a cell 40. For example, when the network shall uplink-schedule a mobile station 20, the scheduler 180 transmits the assigned USF using the assigned training sequence. Any other mobile station 20 with the same USF assigned will not successfully decode this USF, since it will use another training sequence to try to decode the block, and will therefore not be uplink-scheduled.

In yet another embodiment, the base station subsystem 10 further comprises a transmitter 190 configured to transmit data to each of the mobile stations 20 in a cell 40 using each respective training sequence assigned to each respective mobile station 20 in a cell 40. When the network shall transmit a downlink block to a mobile station 20 the transmitter 190 shall transmit it using the training sequence which was assigned to the mobile station 20 at TBF assignment together with the assigned TFI. This will make sure that only one mobile station 20 will successfully receive the downlink block.

In a particular embodiment, the base station subsystem 10 is configured to be implemented in a General Packet Radio Service / Enhanced Data rates for GSM Evolution (GPRS/EDGE) mobile network.

The units 110-190 of the base station subsystem 10 can be implemented in hardware, in software or a combination of hardware and software. Although the respective units 110-190 disclosed in conjunction with Fig. 5 have been disclosed as physically separate units 110-190 in the base station subsystem 10, and all may be special purpose circuits, such as ASICs (Application Specific Integrated Circuits), alternative embodiments are possible where some or all of the units 110-190 are implemented as computer program modules running on a general purpose processor.

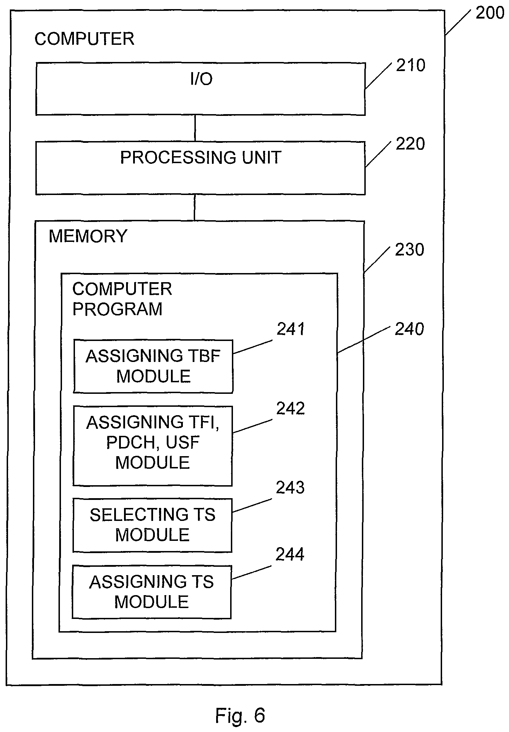

In such a case and with reference to Fig. 6, the base station subsystem 10 can be implemented in a computer 200 comprising a general input/output (I/O) unit 210 in order to enable communication in the network, a processing unit 220, such as a DSP (Digital Signal Processor) or CPU (Central Processing Unit). The processing unit 220 can be a single unit or a plurality of units for performing different steps of the method described herein. The computer 200 also comprises at least one computer program product 230 in the form of a non-volatile memory, for instance an EEPROM (Electrically Erasable Programmable Read-Only Memory), a flash memory or a disk drive. The computer program product 230 comprises computer readable code means and a computer program 240 for allocating radio resources to a plurality of mobile stations 20 in a wireless communication system 1.

The computer program 240 comprises code means 241-244 which when run by a processing unit 220 of the base station subsystem 10, causes the processing unit 220 to perform the steps of the method described in the foregoing in connection with Fig. 3. Hence, in an embodiment the code means 241-244 in the computer program 240 comprises an assigning TBF module for assigning a TBF value to each of the mobile stations 20 in a cell 40, an assigning TFI, PDCH, USF module for assigning to each TBF a TFI, at least one PDCH and an USF if the TBF is an uplink TBF, a selecting TS module for selecting different training sequence from a plurality of available training sequences, and an assigning TS module for assigning a respective different selected training sequence to two or more TBFs wherein the two or more TBFs share the same assigned TFI, PDCH and/or USF if the TBF is an uplink TBF.

The embodiments as disclosed herein can be used to increase the address space of a wireless communication system, such as the GPRS/EGDE mobile network, allowing more users sharing the same PDCHs on the air interface. This allows for higher utilization of the available spectrum on the air interface which is beneficial to the operator Capital expenditures (CAPEX). It also decreases the need to fast disconnect TBFs to free up addressing resources which is beneficial to the end user experience.

This solution does not require any change in technical specifications and will therefore work with all legacy GPRS/EDGE capable mobile devices.

The embodiments described above are to be understood as a few illustrative examples of the present invention. It will be understood by those skilled in the art that various modifications, combinations and changes may be made to the embodiments without departing from the scope of the present invention. In particular, different part solutions in the different embodiments can be combined in other configurations, where technically possible. The scope of the present invention is, however, defined by the appended claims.

## Claims

1. A method, in a base station subsystem (10), of allocating radio resources to a plurality of mobile stations (20) in a wireless communication system (1), the method comprising:
the base station subsystem (10) assigning (S10) a respective Temporary Block Flow (TBF) to each of said plurality of mobile stations (20) in a cell (40);
the base station subsystem (10) assigning (S20) to each said TBF a Temporary Flow Identity (TFI), at least one Packet Data Channel (PDCH), and an Uplink State Flag (USF) if the TBF is an uplink TBF;
the base station subsystem (10) selecting (S30) different training sequences from a plurality of available training sequences;
the base station subsystem (10) assigning (S40) a respective different selected training sequence to each of the mobile stations sharing the same assigned Temporary Flow Identity (TFI), the same assigned Packet Data Channel (PDCH), and the same assigned Uplink State Flag (USF) if the TBF is an uplink TBF; and
the base station subsystem (10) transmitting (S60) data to each of said plurality of mobile stations (20) in the cell (40) on at least one PDCH assigned to a respective mobile station (20), using the respective training sequence assigned to said respective mobile station (20), a header of said data containing a respective TFI and, if the TBF is an uplink TBF, a respective USF value assigned to said respective mobile station (20).

2. The method according to claim 1, further comprising:
the base station subsystem (10) arranging (S35) said plurality of mobile stations (20) into a plurality of subsets (30) of mobile stations (20) chosen among the plurality of mobile stations (20) in a cell (40); wherein
said step of assigning (S40) training sequences comprises the base station subsystem (10) assigning a first training sequence to a first TBF assigned to a mobile station (20) of a first subset (30) of mobile stations (20), and a second different training sequence to a second TBF assigned to a mobile station (20) of a second subset (30) of mobile stations (20), wherein said first and second TBF share the same assigned Temporary Flow Identity (TFI), the same assigned Packet Data Channel (PDCH), and/or the same assigned Uplink State Flag (USF) if the TBF is an uplink TBF.

3. The method according to claim 1 or 2, wherein said step of assigning (S40) training sequences comprises assigning training sequences dynamically for each of said plurality of mobile stations (20) in a cell (40).

4. The method according to any of the claims 1 to 3, further comprising the base station subsystem (10) scheduling (S50) each of said plurality of mobile stations (20) in the cell (40) for uplink and downlink communication using a respective training sequence assigned to each respective mobile station (20) to be scheduled in the cell (40).

5. The method according to any of the claims 1 to 4, wherein the method is implemented in a General Packet Radio Service / Enhanced Data rates for GSM Evolution (GPRS/EDGE) mobile network.

6. A base station subsystem (10) configured to allocate radio resources to a plurality of mobile stations (20) in a wireless communication system (1), wherein the base station subsystem (10) comprises:
a TBF assigner (110) configured to assign a respective Temporary Block Flow (TBF) to each of said plurality of mobile stations (20) in a cell (40);
a TFI assigner (120) configured to assign to each said TBF a Temporary Flow Identity (TFI);
a PDCH assigner (130) configured to assign to each said TBF at least one Packet Data Channel (PDCH);
an USF assigner (140) configured to assign for each assigned uplink PDCH an Uplink State Flag (USF);
a training sequence selector (150) configured to select different training sequences from a plurality of available training sequences;
a training sequence assigner (160) configured to assign a respective different selected training sequence to each of the mobile stations sharing the same assigned Temporary Flow Identity (TFI), the same assigned Packet Data Channel (PDCH), and the same assigned Uplink State Flag (USF) if the TBF is an uplink TBF; and
a transmitter (190) configured to transmit data to each of said plurality of mobile stations (20) in the cell (40) on at least one PDCH assigned to a respective mobile station (20), using the respective training sequence assigned to said respective mobile station (20), a header of said data containing a respective TFI and, if the TBF is an uplink TBF, a respective USF value assigned to said respective mobile station (20).

7. The base station subsystem (10) according to claim 6, further comprising:
a mobile station arranger (170) configured to arrange said plurality of mobile stations (20) into a plurality of subsets (30) of mobile stations (20) chosen among the plurality of mobile stations (20) in a cell (40); wherein
said training sequence assigner (160) is configured to assign a first training sequence to a first TBF assigned to a mobile station (20) of a first subset (30) of mobile stations (20), and a second different training sequence to a second TBF assigned to a mobile station (20) of a second subset (30) of mobile stations (20), wherein said first and second TBF share the same assigned Temporary Flow Identity (TFI), the same assigned Packet Data Channel (PDCH), and/or the same assigned Uplink State Flag (USF) if the TBF is an uplink TBF.

8. The base station subsystem (10) according to claim 6 or 7, wherein the training sequence assigner (160) is configured to assign training sequences dynamically for each of said plurality of mobile stations (20) in a cell (40).

9. The base station subsystem (10) according to any of the claims 6 to 8, further comprising a scheduler (180) configured to schedule each of said plurality of mobile stations (20) in the cell (40) for uplink and downlink communication using a respective training sequence assigned to each respective mobile station (20) to be scheduled in the cell (40).

10. The base station subsystem (10) according to any of the claims 6 to 9 configured to be implemented in a General Packet Radio Service / Enhanced Data rates for GSM Evolution (GPRS/EDGE) mobile network.

11. A computer program (240) for allocating radio resources to a plurality of mobile stations (20) in a wireless communication system (1), the computer program (240) comprising code means (241-244) which when run by a processing unit (220) of the base station subsystem (10) causes the processing unit (220) to:
assign a respective Temporary Block Flow (TBF) to each of said plurality of mobile stations (20) in a cell (40);
assign to each said TBF a Temporary Flow Identity (TFI), at least one Packet Data Channel (PDCH), and an Uplink State Flag (USF) if the TBF is an uplink TBF;
select different training sequences from a plurality of available training sequences;
assign a respective different selected training sequence to each of the mobile stations sharing the same assigned Temporary Flow Identity (TFI), the same assigned Packet Data Channel (PDCH), and the same assigned Uplink State Flag (USF) if the TBF is an uplink TBF; and
prepare data for transmitting to each of said plurality of mobile stations (20) in the cell (40) on at least one PDCH assigned to a respective mobile station (20), using a respective training sequence assigned to said respective mobile station (20), a header of said data containing a respective TFI and, if the TBF is an uplink TBF, a respective USF value assigned to said respective mobile station (20).

12. A computer program product (230) comprising computer readable code means and a computer program (240) according to claim 11 stored on the computer readable code means.

## Patentansprüche

1. Verfahren in einem Basisstationssubsystem (10) zur Zuteilung von Funkressourcen zu einer Vielzahl von Mobilstationen (20) in einem drahtlosen Kommunikationssystem (1), wobei das Verfahren Folgendes umfasst:
das Basisstationssubsystem (10) weist (S10) jeder der Vielzahl von Mobilstationen (20) in einer Zelle (40) einen entsprechenden temporären Blockfluss (Temporary Block Flow, TBF) zu;
das Basisstationssubsystem (10) weist (S20) jedem der TBF eine temporäre Flussidentität (Temporary Flow Identity, TFI), mindestens einen Paketdatenkanal (Packet Data Channel, PDCH) und, sofern der TBF ein Aufwärtsstrecken-TBF ist, ein Aufwärtsstrecken-Zustandsflag (Uplink State Flag, USF) zu;
das Basisstationssubsystem (10) wählt (S30) verschiedene Trainingssequenzen aus einer Vielzahl von verfügbaren Trainingssequenzen aus;
das Basisstationssubsystem (10) weist (S40) jeder der Mobilstationen, die sich die gleiche zugewiesene temporäre Flussidentität (TFI), den gleichen zugewiesenen Paketdatenkanal (PDCH) und, sofern der TBF ein Aufwärtsstrecken-TBF ist, das gleiche zugewiesene Aufwärtsstrecken-Zustandsflag (USF) teilen, eine ausgewählte entsprechende verschiedene Trainingssequenz zu; und
das Basisstationssubsystem (10) überträgt (S60) unter Verwendung der entsprechenden Trainingssequenz, die der entsprechenden Mobilstation (20) zugewiesen ist, eines Dateikopfs der Daten, der eine entsprechende TFI enthält, und, sofern der TBF ein Aufwärtsstrecken-TBF ist, eines entsprechenden USF-Werts, der der entsprechenden Mobilstation (20) zugewiesen ist, Daten an jede der Vielzahl von Mobilstationen (20) in der Zelle (40) auf mindestens einem einer entsprechenden Mobilstation (20) zugewiesenen PDCH.

2. Verfahren nach Anspruch 1, ferner umfassend:
das Basisstationssubsystem (10) ordnet (S35) die Vielzahl von Mobilstationen (20) in eine Vielzahl von Teilbereichen (30) von Mobilstationen (20) an, die unter der Vielzahl von Mobilstationen (20) in einer Zelle (40) ausgewählt wurden; wobei
der Schritt des Zuweisens (S40) von Trainingssequenzen umfasst, dass das Basisstationssubsystem (10) einem ersten TBF, der einer Mobilstation (20) eines ersten Teilbereichs (30) von Mobilstationen (20) zugewiesen ist, eine erste Trainingssequenz zuweist, und einem zweiten TBF, der einer Mobilstation (20) eines zweiten Teilbereichs (30) von Mobilstationen (20) zugewiesen ist, eine zweite verschiedene Trainingssequenz zuweist, wobei sich der erste und zweite TBF die gleiche zugewiesene temporäre Flussidentität (TFI), den gleichen zugewiesenen Paketdatenkanal (PDCH) und/oder, sofern der TBF ein Aufwärtsstrecken-TBF ist, das gleiche zugewiesene Aufwärtsstrecken-Zustandsflag (USF) teilen.

3. Verfahren nach Anspruch 1 oder 2, wobei der Schritt des Zuweisens (S40) von Trainingssequenzen die dynamische Zuweisung von Trainingssequenzen für jede der Vielzahl von Mobilstationen (20) in einer Zelle (40) umfasst.

4. Verfahren nach einem der Ansprüche 1 bis 3, ferner umfassend, dass das Basisstationssubsystem (10) jede der Vielzahl von Mobilstationen (20) in der Zelle (40) unter Verwendung einer entsprechenden Trainingssequenz, die jeder entsprechenden zu planenden Mobilstation (20) in der Zelle (40) zugewiesen ist, für eine Aufwärts- und Abwärtsstreckenkommunikation plant (S50).

5. Verfahren nach einem der Ansprüche 1 bis 4, wobei das Verfahren in einem General Packet Radio Service / Enhanced Data rates for GSM Evolution (GPRS/EDGE)-Mobilnetzwerk implementiert ist.

6. Basisstationssubsystem (10), das konfiguriert ist, Funkressourcen einer Vielzahl von Mobilstationen (20) in einem drahtlosen Kommunikationssystem (1) zuzuteilen, wobei das Basisstationssubsystem (10) Folgendes umfasst:
einen TBF-Zuweiser (110), der konfiguriert ist, jeder der Vielzahl von Mobilstationen (20) in einer Zelle (40) einen entsprechenden temporären Blockfluss (TBF) zuzuweisen;
einen TFI-Zuweiser (120), der konfiguriert ist, jedem der TBF eine temporäre Flussidentität (TFI) zuzuweisen;
einen PDCH-Zuweiser (130), der konfiguriert ist, jedem der TBF mindestens einen Paketdatenkanal (PDCH) zuzuweisen;
einen USF-Zuweiser (140), der konfiguriert ist, für jeden zugewiesenen Aufwärtsstrecken-PDCH ein Aufwärtsstrecken-Zustandsflag (USF) zuzuweisen;
einen Trainingssequenz-Selektor (150), der konfiguriert ist, verschiedene Trainingssequenzen aus einer Vielzahl von verfügbaren Trainingssequenzen auszuwählen;
einen Trainingssequenz-Zuweiser (160), der konfiguriert ist, jeder der Mobilstationen, die sich die gleiche zugewiesene temporäre Flussidentität (TFI), den gleichen zugewiesenen Paketdatenkanal (PDCH) und, sofern der TBF ein Aufwärtsstrecken-TBF ist, das gleiche zugewiesene Aufwärtsstrecken-Zustandsflag (USF) teilen, eine ausgewählte entsprechende verschiedene Trainingssequenz zuzuweisen; und
einen Transmitter (190), der konfiguriert ist, Daten an jede der Vielzahl von Mobilstationen (20) in einer Zelle (40) auf mindestens einem einer entsprechenden Mobilstation (20) zugewiesenen PDCH zu übertragen, unter Verwendung der entsprechenden Trainingssequenz, die der entsprechenden Mobilstation (20) zugewiesen ist, eines Dateikopfs der Daten, der eine entsprechende TFI enthält, und, sofern der TBF ein Aufwärtsstrecken-TBF ist, eines entsprechenden USF-Werts, der der entsprechenden Mobilstation (20) zugewiesen ist.

7. Basisstationssubsystem (10) nach Anspruch 6, ferner umfassend:
einen Mobilstation-Anordner (170), der konfiguriert ist, die Vielzahl von Mobilstationen (20) in eine Vielzahl von Teilbereichen (30) von Mobilstationen (20) anzuordnen, die unter der Vielzahl von Mobilstationen (20) in einer Zelle (40) ausgewählt wurden; wobei
der Trainingssequenz-Zuweiser (160) konfiguriert ist, einem ersten TBF, der einer Mobilstation (20) eines ersten Teilbereichs (30) von Mobilstationen (20) zugewiesen ist, eine erste Trainingssequenz zuzuweisen, und einem zweiten TBF, der einer Mobilstation (20) eines zweiten Teilbereichs (30) von Mobilstationen (20) zugewiesen ist, eine zweite verschiedene Trainingssequenz zuzuweisen, wobei sich der erste und zweite TBF die gleiche zugewiesene temporäre Flussidentität (TFI), den gleichen zugewiesenen Paketdatenkanal (PDCH) und/oder, sofern der TBF ein Aufwärtsstrecken-TBF ist, das gleiche zugewiesene Aufwärtsstrecken-Zustandsflag (USF) teilen.

8. Basisstationssubsystem (10) nach Anspruch 6 oder 7, wobei der Trainingssequenz-Zuweiser (160) konfiguriert ist, Trainingssequenzen für jede der Vielzahl von Mobilstationen (20) in einer Zelle (40) dynamisch zuzuweisen.

9. Basisstationssubsystem (10) nach einem der Ansprüche 6 bis 8, ferner umfassend einen Scheduler (180), der konfiguriert ist, unter Verwendung einer entsprechenden Trainingssequenz, die jeder entsprechenden zu planenden Mobilstation (20) in der Zelle (40) zugewiesen ist, jede der Vielzahl von Mobilstationen (20) in der Zelle (40) für Aufwärts- und Abwärtsstreckenkommunikation zu planen.

10. Basisstationssubsystem (10) nach einem der Ansprüche 6 bis 9, das zur Implementation in einem General Packet Radio Service / Enhanced Data rates for GSM Evolution (GPRS/EDGE)-Mobilnetzwerk konfiguriert ist.

11. Computerprogramm (240) zur Zuteilung von Ressourcen zu einer Vielzahl von Mobilstationen (20) in einem drahtlosen Kommunikationssystem (1), wobei das Computerprogramm (240) Codemittel (241-244) umfasst, die beim Ausführen durch eine Verarbeitungseinheit (220) des Basisstationssubsystems (10) die Verarbeitungseinheit (220) zu Folgendem veranlassen:
jeder der Vielzahl von Mobilstationen (20) in einer Zelle (40) einen entsprechenden temporären Blockfluss (TBF) zuzuweisen;
jedem der TBF eine temporäre Flussidentität (TFI), mindestens einen Paketdatenkanal (PDCH) und, sofern der TBF ein Aufwärtsstrecken-TBF ist, ein Aufwärtsstrecken-Zustandsflag (USF) zuzuweisen;
verschiedene Trainingssequenzen aus einer Vielzahl von verfügbaren Trainingssequenzen auszuwählen;
jeder der Mobilstationen, die sich die gleiche zugewiesene temporäre Flussidentität (TFI), den gleichen zugewiesenen Paketdatenkanal (PDCH) und, sofern der TBF ein Aufwärtsstrecken-TBF ist, das gleiche zugewiesene Aufwärtsstrecken-Zustandsflag (USF) teilen, eine ausgewählte entsprechende verschiedene Trainingssequenz zuzuweisen; und
Daten zur Übertragung an jede der Vielzahl von Mobilstationen (20) in einer Zelle (40) auf mindestens einem einer entsprechenden Mobilstation (20) zugewiesenen PDCH aufzubereiten, unter Verwendung einer entsprechenden Trainingssequenz, die der entsprechenden Mobilstation (20) zugewiesen ist, eines Dateikopfs der Daten, der eine entsprechende TFI enthält, und, sofern der TBF ein Aufwärtsstrecken-TBF ist, eines entsprechenden USF-Werts, der der entsprechenden Mobilstation (20) zugewiesen ist.

12. Computerprogrammprodukt (230), das computerlesbare Codemittel umfasst, und Computerprogramm (240) nach Anspruch 11, das auf dem computerlesbaren Codemittel gespeichert ist.

## Revendications

1. Procédé, mis en oeuvre dans un sous-système de station de base (10), d'affectation de ressources radio à une pluralité de stations mobiles (20) dans un système de communication sans fil (1), le procédé comprenant les étapes ci-dessous dans lesquelles :
le sous-système de station de base (10) affecte (S10) un flux de blocs temporaire respectif (TBF) à chaque station de ladite pluralité de stations mobiles (20) dans une cellule (40) ;
le sous-système de station de base (10) affecte (S20), à chaque dit flux TBF, une identité de flux temporaire (TFI), au moins un canal de données en paquets (PDCH) et un drapeau d'état de liaison montante (USF) si le flux TBF est un flux TBF de liaison montante ;
le sous-système de station de base (10) sélectionne (S30) différentes séquences d'apprentissage parmi une pluralité de séquences d'apprentissage disponibles ;
le sous-système de station de base (10) affecte (S40) une séquence d'apprentissage sélectionnée différente respective à chacune des stations mobiles partageant la même identité de flux temporaire affectée (TFI), le même canal de données en paquets affecté (PDCH), et le même drapeau d'état de liaison montante affecté (USF), si le flux TBF est un flux TBF de liaison montante ; et
le sous-système de station de base (10) transmet (S60) des données à chacune de ladite pluralité de stations mobiles (20) dans la cellule (40) sur au moins un canal PDCH affecté à une station mobile respective (20), en utilisant la séquence d'apprentissage respective affectée à ladite station mobile respective (20), un en-tête desdites données contenant une identité TFI respective et, si le flux TBF est un flux TBF de liaison montante, une valeur de drapeau USF respective affectée à ladite station mobile respective (20).

2. Procédé selon la revendication 1, comprenant en outre l'étape ci-dessous dans laquelle :
le sous-système de station de base (10) agence (S35) ladite pluralité de stations mobiles (20) en une pluralité de sous-ensembles (30) de stations mobiles (20) choisies parmi la pluralité de stations mobiles (20) dans une cellule (40) ; dans lequel
ladite étape d'affectation (S40) de séquences d'apprentissage comprend l'étape dans laquelle le sous-système de station de base (10) affecte une première séquence d'apprentissage à un premier flux TBF affecté à une station mobile (20) d'un premier sous-ensemble (30) de stations mobiles (20), et affecte une seconde séquence d'apprentissage, différente, à un second flux TBF affecté à une station mobile (20) d'un second sous-ensemble (30) de stations mobiles (20), dans lequel lesdits premier et second flux TBF partagent la même identité de flux temporaire affectée (TFI), le même canal de données en paquets affecté (PDCH), et/ou le même drapeau d'état de liaison montante affecté (USF) si le flux TBF est un flux TBF de liaison montante.

3. Procédé selon la revendication 1 ou 2, dans lequel ladite étape d'affectation (S40) de séquences d'apprentissage consiste à affecter des séquences d'apprentissage, dynamiquement, pour chacune de ladite pluralité de stations mobiles (20) dans une cellule (40).

4. Procédé selon l'une quelconque des revendications 1 à 3, comprenant en outre l'étape dans laquelle le sous-système de station de base (10) planifie (S50) chacune de ladite pluralité de stations mobiles (20) dans la cellule (40) pour une communication en liaison montante et en liaison descendante, en utilisant une séquence d'apprentissage respective affectée à chaque station mobile respective (20) à planifier dans la cellule (40).

5. Procédé selon l'une quelconque des revendications 1 à 4, dans lequel le procédé est mis en oeuvre dans un réseau mobile de service général de radiocommunication en mode paquet / débits binaires améliorés pour les futurs systèmes GSM (GPRS/EDGE).

6. Sous-système de station de base (10) configuré de manière à affecter des ressources radio à une pluralité de stations mobiles (20) dans un système de communication sans fil (1), dans lequel le sous-système de station de base (10) comprend :
un module d'affectation de flux TBF (110) configuré de manière à affecter un flux de blocs temporaire respectif (TBF) à chaque station de ladite pluralité de stations mobiles (20) dans une cellule (40) ;
un module d'affectation d'identité TFI (120) configuré de manière à affecter, à chaque dit flux TBF, une identité de flux temporaire (TFI) ;
un module d'affectation de canal PDCH (130) configuré de manière à affecter, à chaque dit flux TBF, au moins un canal de données en paquets (PDCH) ;
un module d'affectation de drapeau USF (140) configuré de manière à affecter, pour chaque canal PDCH de liaison montante affecté, un drapeau d'état de liaison montante (USF) ;
un sélecteur de séquences d'apprentissage (150) configuré de manière à sélectionner différentes séquences d'apprentissage parmi une pluralité de séquences d'apprentissage disponibles ;
un module d'affectation de séquence d'apprentissage (160) configuré de manière à affecter une séquence d'apprentissage sélectionnée différente respective à chacune des stations mobiles partageant la même identité de flux temporaire affectée (TFI), le même canal de données en paquets affecté (PDCH), et le même drapeau d'état de liaison montante affecté (USF), si le flux TBF est un flux TBF de liaison montante ; et
un émetteur (190) configuré de manière à transmettre des données à chacune de ladite pluralité de stations mobiles (20) dans la cellule (40) sur au moins un canal PDCH affecté à une station mobile respective (20), en utilisant la séquence d'apprentissage respective affectée à ladite station mobile respective (20), un en-tête desdites données contenant une identité TFI respective et, si le flux TBF est un flux TBF de liaison montante, une valeur de drapeau USF respective affectée à ladite station mobile respective (20).

7. Sous-système de station de base (10) selon la revendication 6, comprenant en outre :
un agenceur de station mobile (170) configuré de manière à agencer ladite pluralité de stations mobiles (20) en une pluralité de sous-ensembles (30) de stations mobiles (20) choisies parmi la pluralité de stations mobiles (20) dans une cellule (40) ; dans lequel
ledit module d'affectation de séquences d'apprentissage (160) est configuré de manière à affecter une première séquence d'apprentissage à un premier flux TBF affecté à une station mobile (20) d'un premier sous-ensemble (30) de stations mobiles (20), et à affecter une seconde séquence d'apprentissage, différente, à un second flux TBF affecté à une station mobile (20) d'un second sous-ensemble (30) de stations mobiles (20), dans lequel lesdits premier et second flux TBF partagent la même identité de flux temporaire affectée (TFI), le même canal de données en paquets affecté (PDCH), et/ou le même drapeau d'état de liaison montante affecté (USF) si le flux TBF est un flux TBF de liaison montante.

8. Sous-système de station de base (10) selon la revendication 6 ou 7, dans lequel le module d'affectation de séquence d'apprentissage (160) est configuré de manière à affecter des séquences d'apprentissage, dynamiquement, pour chaque station de ladite pluralité de stations mobiles (20) dans une cellule (40).

9. Sous-système de station de base (10) selon l'une quelconque des revendications 6 à 8, comprenant en outre un planificateur (180) configuré de manière à planifier chacune de ladite pluralité de stations mobiles (20) dans la cellule (40) pour une communication en liaison montante et en liaison descendante, en utilisant une séquence d'apprentissage respective affectée à chaque station mobile respective (20) à planifier dans la cellule (40).

10. Sous-système de station de base (10) selon l'une quelconque des revendications 6 à 9, configuré de manière à être mis en oeuvre dans un réseau mobile de service général de radiocommunication en mode paquet / débits binaires améliorés pour les futurs systèmes GSM (GPRS/EDGE).

11. Programme informatique (240) destiné à affecter des ressources radio à une pluralité de stations mobiles (20) dans un système de communication sans fil (1), le programme informatique (240) comprenant des moyens de code (241-244) qui, lorsqu'ils sont exécutés par une unité de traitement (220) du sous-système de station de base (10), amènent l'unité de traitement (220) à :
affecter un flux de blocs temporaire respectif (TBF) à chaque station de ladite pluralité de stations mobiles (20) dans une cellule (40) ;
affecter, à chaque dit flux TBF, une identité de flux temporaire (TFI), au moins un canal de données en paquets (PDCH), et un drapeau d'état de liaison montante (USF), si le flux TBF est un flux TBF de liaison montante ;
sélectionner différentes séquences d'apprentissage parmi une pluralité de séquences d'apprentissage disponibles ;
affecter une séquence d'apprentissage sélectionnée différente respective à chacune des stations mobiles partageant la même identité de flux temporaire affectée (TFI), le même canal de données en paquets affecté (PDCH), et le même drapeau d'état de liaison montante affecté (USF), si le flux TBF est un flux TBF de liaison montante ; et
préparer des données à transmettre à chacune de ladite pluralité de stations mobiles (20) dans la cellule (40) sur au moins un canal PDCH affecté à une station mobile respective (20), en utilisant une séquence d'apprentissage respective affectée à ladite station mobile respective (20), un en-tête desdites données contenant une identité TFI respective et, si le flux TBF est un flux TBF de liaison montante, une valeur de drapeau USF respective affectée à ladite station mobile respective (20).

12. Produit-programme informatique (230) comportant un moyen de code lisible par ordinateur, et un programme informatique (240) selon la revendication 11 stocké sur le moyen de code lisible par ordinateur.
